# EUROPEAN PATENT SPECIFICATION

(11) **EP 4 498 030 B1**
(45) Date of publication and mention of the grant of the patent: **16.09.2026**
(21) Application number: 23275110.7
(22) Date of filing: 25.07.2023
(51) Int. Cl.: F28F 3/02

(54) **HEAT EXCHANGER**
WÄRMETAUSCHER
ECHANGEUR DE CHALEUR

(43) Date of publication of application: 29.01.2025
(73) Proprietor: HS Marston Aerospace Limited, Wolverhampton WV10 6QJ (GB)
(72) Inventor: MCCORMICK, John Patrick, Wolverhampton, WV2 2BN (GB); MCNAB, Christopher Arthur, Staffordshire, ST19 9AH (GB); POLLARD, Berwyn Owain, Wolverhampton, WV4 4PB (GB); ASTLEY, Stuart Anthony, Wolverhampton, WV9 5RY (GB)
(74) Representative: Dehns

(56) References cited:
- CN-A- 112 503 995
- FR-A1- 3 030 707
- FR-A1- 3 066 812
- US-A- 2 952 445
- US-A- 4 941 530
- US-A1- 2005 274 501
- US-A1- 2011 132 570

## Description

### Field of Invention

The present invention relates to a layer of a plate-fin heat exchanger and a method of manufacturing a plate-fin heat exchanger.

### Background

Heat exchangers for transfer of heat between different fluids are very widely used and exist in various forms. Typically heat exchangers are arranged for flow of a primary fluid and a secondary fluid with heat being transferred between the two fluids as they flow through the device. Multi-stream heat exchangers for exchanging heat between more than two fluids also exist in the prior art. Heat exchangers are required within aircraft structures to regulate temperatures of working fluids, and the systems and components they occupy, as well as to extract heat from one system for use in another. Every heat exchanger consumes significant space within an aircraft structure, including in certain areas of the aircraft structure space is at a premium. It is therefore desirable to provide an optimised heat exchanger such that the maximum amount of heat transfer can take place within a given envelope. It is also beneficial for the heat exchangers to be optimised in size whilst still providing efficient heat transfer so that they can fit within space required.

Some heat exchangers have a layered structure with a large number of parallel flow paths between plates that separate the flow paths. There may be 50-200 plates, or more, in this type of heat exchanger, typically with alternating hot/cold fluid flow paths either side of each plate. Such heat exchangers can be referred to as laminate heat exchangers or plate-fin heat exchangers.

Heat exchanger plates general comprise features to promote heat transfer and/or turbulent flow of the fluids such as protrusions extending outward from the body of the plates into the flow of fluid forming a secondary surface, in addition to the plate, which is in contact with the fluid in order to increase the surface area for heat transfer to take place within a given envelope. These features are referred to generally as fins, which includes various geometries of fins forming chambers within the flow passages, such as straight-finned triangular or rectangular arrangements; herringbone, where the fins provide a zig-zag path by effectively running parallel with the flow direction, but with an alternating left-right tilt; serrated and/or perforated fins, which include cuts and perforations in the fins to augment flow distribution and improve heat transfer; as well as fins, where the fins comprise an array of pins formed as columnar shapes extending outward from the body of the plates, typically normal to the plane of the plates. These columnar shapes may be referred to individually as pins or fins, and heat exchangers using this type of arrangement are generally described as fin heat exchangers.

In order to improve the heat transfer efficiency, the plates and the fins are required to be manufactured from lightweight and thin material to allow for maximum heat transfer. However, this can mean that the fins may be easily damaged. There is therefore a desire to protect the delicate geometry of the fins whilst retaining the improved heat transfer properties.

FR 3030707 A1 discloses a heat transfer assembly with the features of the preamble of claim 1, comprising a plurality of fins wherein the leading edge of at least a portion of the fins includes a notch.

FR 3066812 A1 discloses a fin for a heat exchanger which comprises at least one flank where the flank comprises at least two notches.

### Summary of Invention

Viewed from a first aspect, there is provided a layer of a plate-fin heat exchanger comprising: an inlet side for receiving a fluid; an outlet side; a plurality of first fins each having a first end located at the inlet side and extending in direction towards the outlet side to a second end to provide a plurality of first flow channels for the fluid; a central section comprising a plurality of second fins each having a first end adjacent to the second end of each of the plurality of first fins and extending towards the outlet side to a second end to provide a plurality of second flow channels for the fluid; a plurality of third fins each having a first end adjacent to the second end of each of the plurality of second fins of the central section and extending to a second end at the outlet side to provide a plurality of third flow channels for the fluid; a first cavity provided in each of the plurality of second fins at the boundary between the plurality of first fins and the plurality of second fins; and a second cavity in each of the plurality of second fins at the boundary between the plurality of second fins and the plurality of third fins.

The plurality of first fins may comprise guard fins arranged to protect the plurality of second fins from impact.

The plurality of first fins may be formed of a stronger material than the plurality of second fins.

The cavity may be formed in an end surface of each of the first plurality of fins and/or each of the second plurality of fins, wherein the end surface may be substantially perpendicular the direction of the fluid in use.

The plurality of first flow channels may comprise a first geometry and the plurality of second flow channels may comprise a second geometry different from the first geometry.

The cavity may be arranged to provide a transition region for the air flow in use as it travels from the first geometry defined by the plurality of first fins and the second geometry of the plurality of second fins.

The cavity may comprise a concave depression.

The plurality of second fins may comprise herringbone-shape fins.

The plurality of third flow channels may comprise a third geometry which is the same as the first geometry.

The plurality of third fins may be formed of the same material as the plurality of first fins.

The plurality of third fins may be arranged to protect the plurality of second fins from impact on the outlet side.

Viewed from a second aspect, there is provided a plate-fin heat exchanger comprising a plurality of layers as described in the first aspect above.

Viewed from a third aspect, there is provided a method of manufacturing a layer of a heat exchanger as described in the first aspect above, the method comprising: providing a base plate; connecting the plurality of first fins to the base plate; connecting the plurality of second fins to the base plate; joining the second end of each of the plurality of first fins to the first end of each of the plurality of second fins; forming a cavity in each of the plurality of second fins at the boundary between the plurality of first fins and the plurality of second fins.

The step of forming the cavity may comprise using machining techniques including one of cutting, milling or abrasion.

### List of Figures

Certain embodiments of the invention will now be described, by way of example only, with reference to the accompanying drawings, in which:
Figure 1a shows a perspective view of a layer of a plate-fin heat exchanger;
Figure 1b shows an exploded view of the layer of a plate-fin heat exchanger shown in Figure 1a;
Figure 2a shows the inlet end of a layer of a plate-fin heat exchanger;

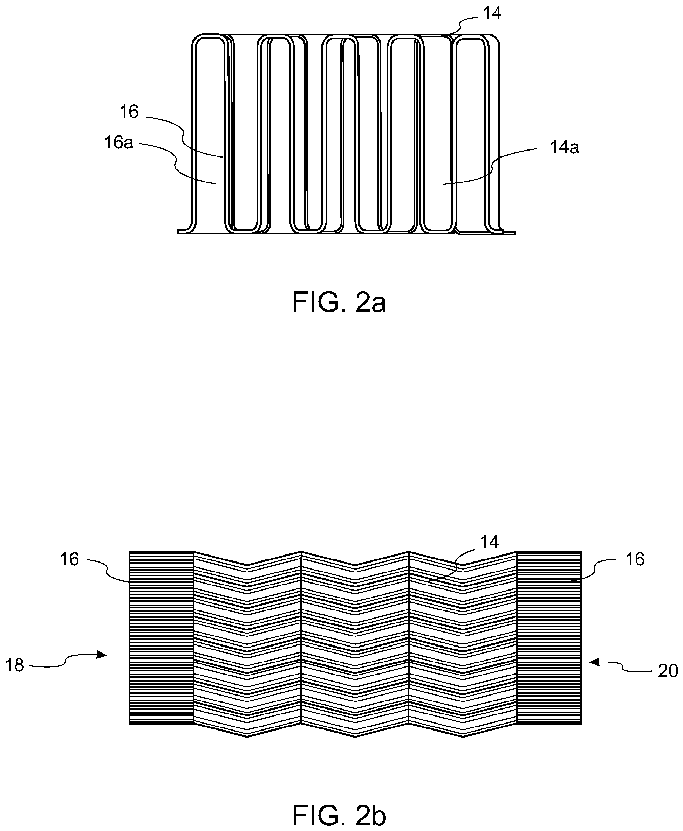

Figure 2a shows a plan view of a layer of a plate-fin heat exchanger;

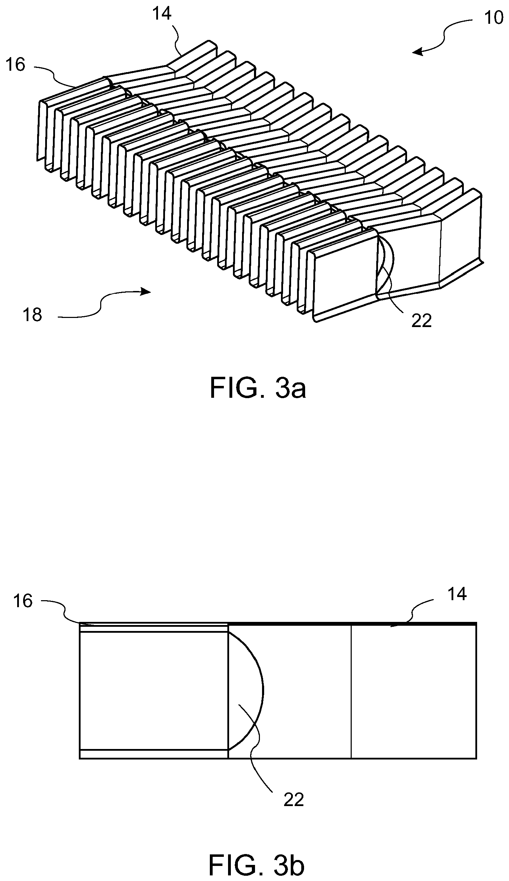

Figure 3a shows a perspective view of an inlet end of a plate of a plate-fin heat exchanger;
Figure 3b shows a side view of the inlet end of a plate-fin heat exchanger;

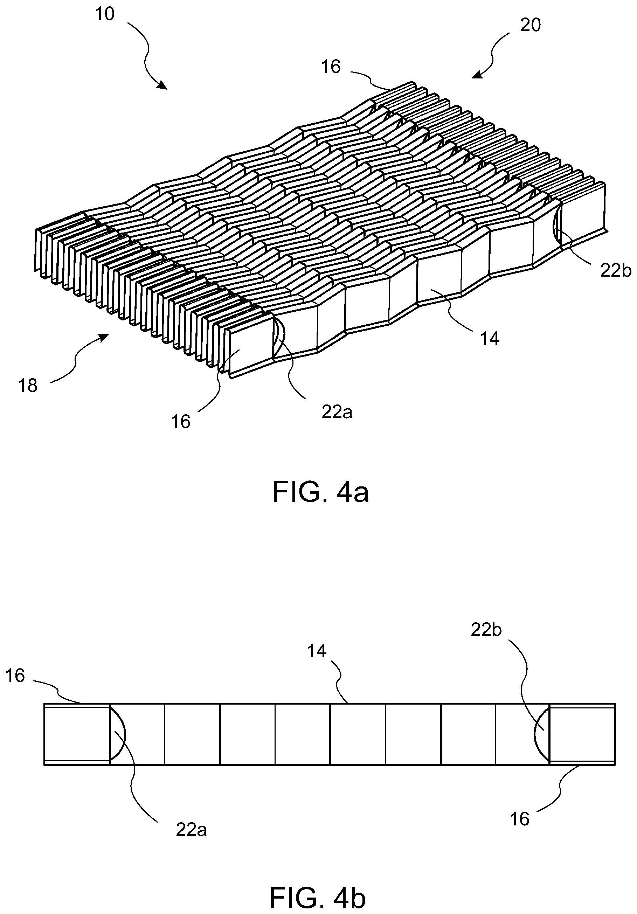

Figure 4a shows a perspective view of a layer of a plate-fin heat exchanger;
Figure 4b shows a side view of a layer of a plate-fin heat exchanger;

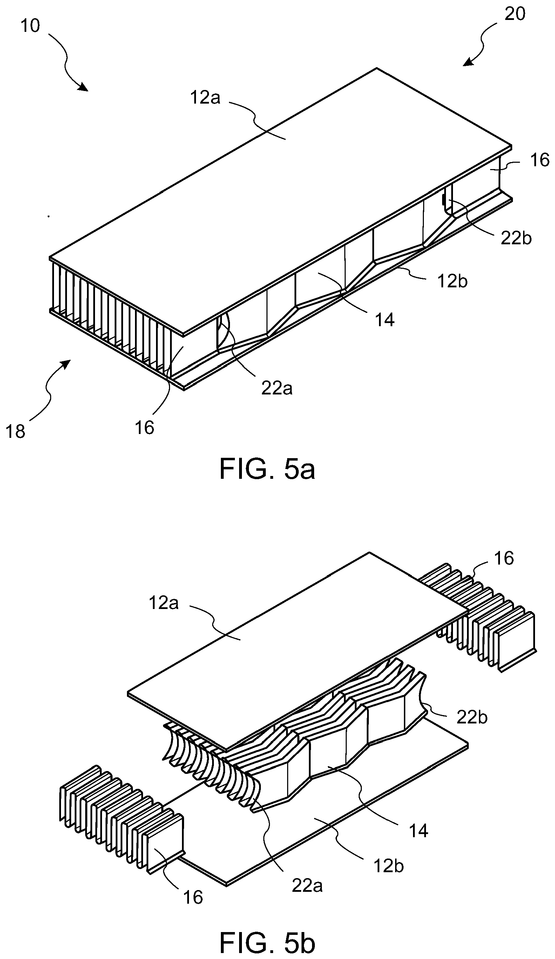

Figure 5a shows a perspective view of a layer of a plate-fin heat exchanger;
Figure 5b shows an exploded view of the layer of a plate-fin heat exchanger shown in Figure 5a;

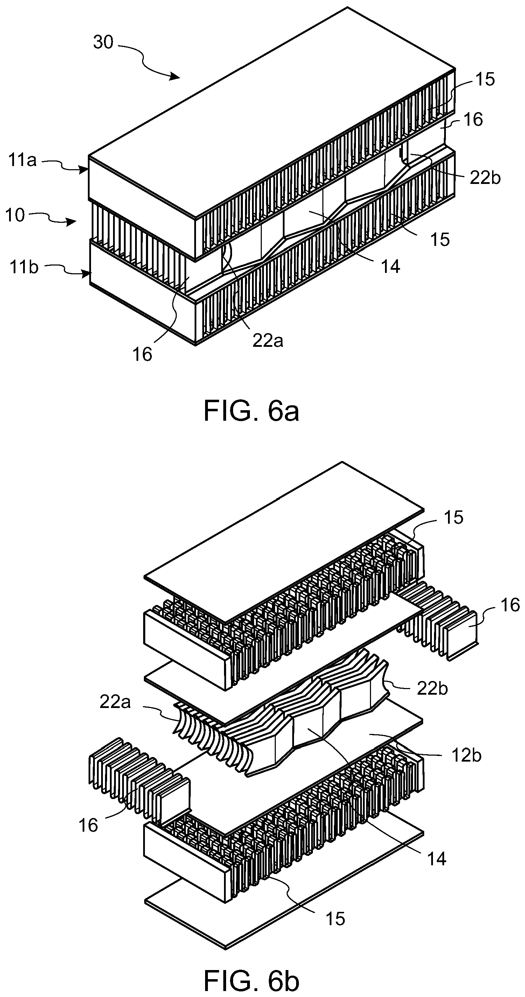

Figure 6a shows a perspective view of a plate-fin heat exchanger;
Figure 6b shows an exploded view of the plate-fin heat exchanger shown in Figure 6a;

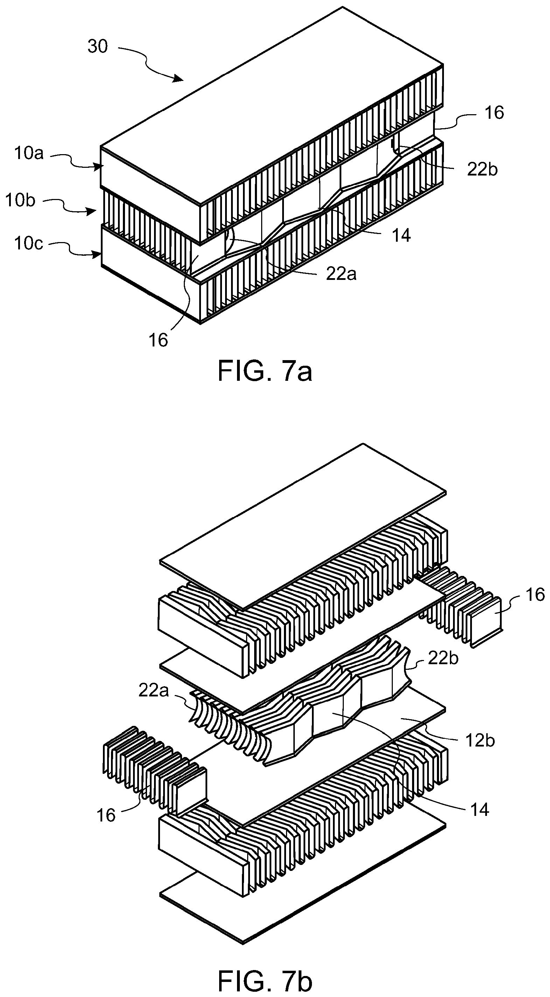

Figure 7a shows a perspective view of a plate-fin heat exchanger; and
Figure 7b shows an exploded view of the plate-fin heat exchanger shown in Figure 7a.

### Detailed Description

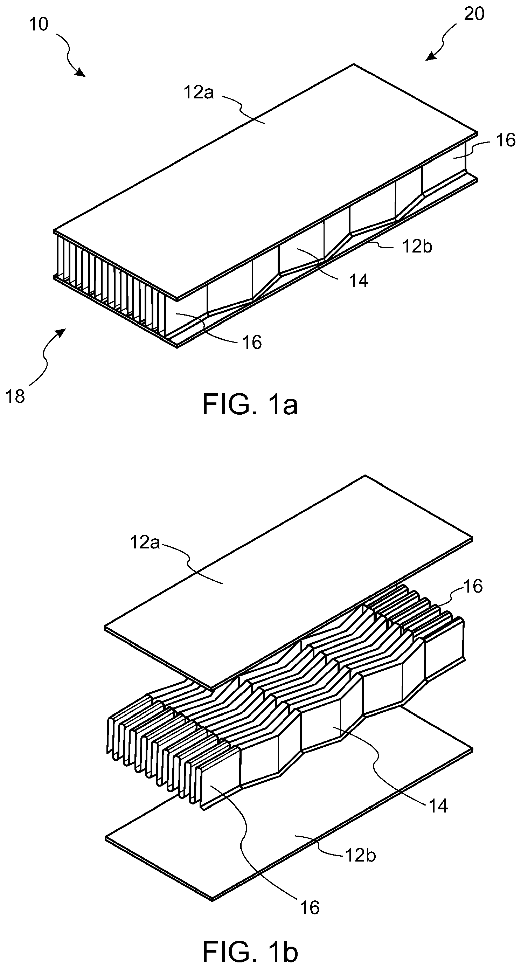

Figure 1a shows a single layer 10 of a plate-fin heat exchanger comprising an inlet end 18 and an outlet end 20. Figure 1b shows an exploded view of the same layer 10 of a plate-fin heat exchanger.

The layer 10 depicted in Figures 1a and 1b may be part of a plate-fin heat exchanger comprising a plurality of layers 10, for example, the heat exchanger may comprise between 50 to 200 of said layers 10.

The heat exchanger layer 10 comprises a base plate 12b and a top plate 12b and a plurality of fins 14, 16 extending between the base plate 12b and top plate 12a. Each of the fins 14, 16 extend in perpendicular direction relative to the base plate 12 and along the length of the plates 12a, 12b in a general direction between the inlet side 18 and the outlet side 20.

Each of the plurality of fins 14, 16 may be connected to each plate 12a, 12b by any means. For example, the fins 14, 16 may be brazed or welded to the plates 12a, 12b. Alternatively, the fins 14, 16 may be integrally formed with one of the plates 12a, 12b and then brazed or welded to the other of the plates 12a, 12b. As a further alternative the fins 14, 16 may be integrally formed with both of the plates 12a, 12b. This integral form can be products using additive manufacturing methods, or more conventional subtractive manufacturing techniques.

When the layer 10 is part of a stack of layers 10 to form a plate-fin heat exchanger, a further set of fins 14, 16 may extend in a perpendicular direction away from the top plate 12a towards a further plate (not shown). Effectively, the top plate 12a of the present layer 10 forms the base plate for the adjacent layer of the plate-fin heat exchanger. The further set of pins fins 12, 14 may be connected to the top plate 12a by the same means as discussed above in connection with the connections provided for the plurality of fins 14, 16 forming the original layer 10.

Each layer 10 of the plate-fin heat exchanger is arranged to constrain alternating fluid types, typically alternating between hot and cold fluid. The plates 12a, 12b of each layer 10 form the boundary between the two flow types of adjacent layers, and the fins 14, 16 extend into the flow path defined by each layer of the heat exchanger.

The heat exchanger layer 10 may be arranged such that a fluid enters the channels between the fins 14, 16 via the inlet side 18 and travels along the length of the layer 10 to the outlet side 20 of the layer 10. This process takes place in each layer 10 of the plate-fin heat exchanger with alternating fluid types in each layer 10 of the heat exchanger.

The plate-fin heat exchanger may operate in a parallel flow configuration whereby each fluid type travels the same direction in every layer. In this scenario, the inlet sides 18 of each layer 10 of the plate-fin heat exchanger will be on the same side of the plate-fin heat exchanger, and consequently, the outlet side 20 of each layer will be on the opposite side of the plate-fin heat exchanger.

Alternatively, the plate-fin heat exchanger may operate in a cross-flow or counter-flow configuration whereby the fluid types travel in opposite directions in each alternating layer 10 or in directions which are perpendicular to each other in each alternating layer 10.

In addition to the layers 10, the plate-fin heat exchanger will comprise inlet and outlet header arrangements to supply the necessary fluid to the inlets 18 and remove the fluid form each layer via the outlets 20. In more detail, the heat exchanger may comprise a first fluid inlet header and a second fluid inlet header. The first fluid inlet header may be connected to a source of first fluid, which may be a cold fluid, and may provide the first fluid to the inlets 18 of each layer arranged to convey the first fluid. Meanwhile, the second fluid inlet header may be connected to a source of second fluid, which may be a hot fluid, to the inlets 18 of each layer arranged to convey the second fluid.

Similarly, the heat exchanger may comprise a first fluid outlet header and a second fluid outlet header. The first fluid outlet header may be configured to receive a first fluid from the outlets 20 of the layers arranged to convey the first fluid and transfer the first fluid to the required destination. Meanwhile, the second fluid outlet header may be configured to receive a second fluid from the outlets 20 of the layers arranged to convey the first fluid and transfer the first fluid to the required destination.

Heat is transferred between the two fluid types within adjacent layers of the heat exchanger due to the heat transfer from a first fluid, e.g. hot fluid, to the fins 14, 16 and then to the base plate 12 of the layer which in turn transfers the heat to the fins 14, 16 of the adjacent base plate 12. The fins 14, 16 also work to promote a turbulent flow through each of the layers which further improves the heat transfer.

The fins 14, 16 of the layer 10 comprise two distinct types of fins. In the present example, the heat exchanger layer 10 comprises a central section which include a plurality of herringbone-shaped fins 14 which provide a plurality of zig-zag channels for the airflow to move through the heat exchanger layer 10. It will be appreciated that the herringbone-shaped fins 10 are one example and any fin arrangement could be present. For example, the fins of the central section may comprise straight or plain fins which provide straight or rectangular flow channels for the airflow.

The herringbone-shaped fins 14 provide improved heat transfer as they promote boundary layer separation along the flow path. The presence of a boundary layer effectively provides an insulating effect between the flow and the surface of the fin, and therefore disrupting the boundary layer through vortex separation promoted by the herringbone geometry will greatly increase the heat transfer between the fluid and the fins. In addition, due to the zig-zag nature of the herringbone-shaped fins 14, the contact time between the surface of the fins 14 and the fluid for a given length is increased resulting in higher heat transfer.

In order to further improve the heat transfer between fluids in adjacent plates 10, the herringbone-shaped fins 14 are manufactured with a reduced thickness. This allows the maximum number of fins 14 to be provided within a given width of the heat exchanger layer 10, therefore increasing the surface area of the fins 14 in contact with the fluid for a given envelope. In addition, the herringbone-shaped fins 14 having a small thickness means that they can more easily be formed into the herringbone shape. However, the disadvantage of this is that it results in the herringbone-fins being easily damaged.

Heat exchangers are typically positioned in areas which may be exposed to airflow. For example, the heat exchanger may be located within a ram duct of an aircraft and may therefore receive air directly from the bypass fan of a gas turbine engine, alternatively it may be located in a separate duct of an engine such as a turbo-prop and be exposed directly to outside air. This airflow may carry debris from the atmosphere, such as ice or hail, which could damage the herringbone-shaped fins 14 upon impact. In addition to impact damage, the herringbone-shaped fins 14 may also be vulnerable to damage caused during the handling of the heat exchanger during its assembly and/or fitting within the aircraft. As a further problem, the location of certain heat exchangers may be inaccessible, or at least difficult to access, which can mean maintenance or replacement of any damaged heat exchangers would be a complicated process and time-consuming process. Accordingly, there is a need to ensure that the herringbone-shaped fins 14 are adequately protected such that their working life-time is increased and the overall maintenance required to the heat exchanger is reduced.

In order to protect the delicate herringbone-shaped fins 14, the layer 10 comprises a plurality of guard fins 16 located at the inlet side 18 of the layer 10. The guard fins 16 comprise a more robust material which is thicker and stiffer than the material used in the herringbone-shaped fins 14 and is able to absorb the shock from impact received by any debris or during the handling of the heat exchanger and limit the damage to the herringbone-shaped fins 14.

The guard fins 16 and the herringbone-shaped fins 14 may be connected to each other at their respective end surface. However, as an alternative arrangement, each of the fins 14, 16 may be connected to the base plate only, and there may be no direct connection between the guard fins 16 and the herringbone-shaped fins 14. In this instance, the respective ends of the guard fins 16 and the herringbone-shaped fins 14 may simply be adjacent to each other. In either case, the area at which the respective ends of the guard fins 16 and the herringbone-shaped fins 14 are adjacent or connected to each other may be considered the boundary or join between the guard fins 16 and the herringbone-shaped fins 14.

Figures 1a and 1b depicts the guard fins 16 at the inlet end 18 and outlet end 20 of the layers.

As shown in Figure 2a and 2b the flow channels 16a defined by the guard fins 16 comprise a first geometry and the flow channels 14a defined by the herringbone-shaped fins 14 comprise a second geometry. The first geometry is typically different to the second geometry, and/or the flow channels 16a defined by the guard fins 16 do not align with the flow channels 14a defined by the herringbone-shaped fins 14 due to the difference in material thickness for each fin 14, 16 type. This means that in use the airflow will move from one geometry to another which can result in a large pressure drop in the flow and reduce the heat transfer efficiency of the heat exchanger.

Additionally, given the difference between the first geometry and the second geometry there is a high likelihood that the flow paths would be misaligned which can lead to further losses in pressure.

In order to reduce this pressure drop, and improve the flow, a cavity 22 is provided at the boundary or join between each of the guard fins 16 and the herringbone-shaped fins 14 as shown in Figures 3a and 3b. In the present example, the cavity 22 is provided in the herringbone-shaped fins 14 at each boundary or join between the two fin types 14, 16.

Moreover, said cavity 22 is provided at each point where the guard fins 16 are joined to the fins 16 along the entire width of the heat exchanger layer 10.

The cavity 22 may be a depression in a surface of the fins 14, 16, wherein said surface in which the cavity 22 is located may be substantially perpendicular to the direction of air flow during use.

The result of a cavity 22 being present at each boundary or join between the respective fins 14, 16 is effectively a continuous channel extending across the width of the heat exchanger layer 10 at the boundary or join between the guard fins 16 and the herringbone-shaped fins 14.

The cavity 22 is arranged to provide a transition region for the airflow such that air flow entering the inlet side 18 of the heat exchanger passes through the flow channels 16a defined by the guard fins 16 with the first geometry, and then enters the respective cavities 22 formed at the boundary or junction between the guard fins 16 and herringbone-shaped fins 14, before entering the flow channels 14a defined by the herringbone-shaped fins 14 having the second geometry.

The resultant transition for the air flow smooths out any pressure changes that may occur as the air flow moves from the first geometry to the secondary geometry as it provides a more gradual change between the first and second geometries. In other words, the cavity acts as a plenum for the flow so there is no immediate loss in pressure as the flow transitions from the first to second geometry. Instead, the flow is allowed to settle within the cavity before gradually entering the flow paths formed by the herringbone-shaped fins 14. This also has the effect of reducing vortex shedding at the inlet to the herringbone-shaped finds 14 which further reduces the pressure drop.

Accordingly, the pressure drop in the air flow moving between the two fins 14, 16 is reduced compared to a heat exchanger layer 10 without the cavities 22.

Furthermore, the presence of a cavity 22 at the boundary between the guard fins 16 and the herringbone-shaped fins 14 improves the impact and handling protection provided by the guard fins 16 as it provides a "crumple zone" for the fins 14, 16 before the herringbone-shaped fins 14. In operation, the debris may impact upon an outer end of the guard fins 16 which may impart a force in the direction of the herringbone-shaped fins 14. Due to the presence of the cavity 22, this force is not transferred directly to the herringbone-shaped fins 14, and there is an area of empty spaced provided by the cavity in which the guard fins 16 may move, or crumple, under impact pressure before the herringbone-shaped fin 14 are impacted.

As a further advantage, the presence of the cavities 22 allows for thermal expansion to take place during use. In view of the fact that the guard fins 16 and the herringbone-shaped fins 14 comprise different materials and thickness, during use each they may each expand and contract at different rates and at different times. Accordingly, the present of a cavity 22 at the boundary between the two fin 14, 16 types allows them to expand and contract accordingly without impacting the adjacent fins 14, 16.

It will be appreciated that the herringbone-shaped fins 14 are merely one example for the fins forming the central section of the heat exchanger. Accordingly, the discussion above regarding the provision and location of the cavity 22 may be applicable to any type of fin, not only a herringbone-shaped fins. For example, the central section of the heat exchange layer 10 may comprise straight fins.

In the present example, the cavity 22 is provided in each of the herringbone-shaped pins fins 16 at the point adjacent to the guard fins 14, i.e. at the boundary or join between the guard fins 16 and the herringbone-shaped fins 14. More specifically, the cavity 22 is located at the join between the guard fins 14 and the herringbone-shaped fins 14 at the inlet side 18 of the heat exchanger layer 10.

The cavity 22 in the present example is scallop-shaped. In other words, the cavity 22 comprise concave shape such that it curves inwards in the direction the air flow is configured to flow in use. It may alternatively be termed a concave depression in the surface of one or more of the fins 14, 16. The cavity 22 may therefore comprise a substantially semi-circular cross section when viewed from the side of the heat exchanger layer as depicted in Figure 3b, and the back surface of the cavity may be curved or hemi-spherical in shape.

However, the shape of the cavity 22 may depend on the functional requirements of the heat exchanger, including the space requirements and its use in operation. Moreover, the size and configuration of the fins 14, 16 may impact the tooling requirements that can be used to manufacture the cavity 22, which will in turn influence the size and configuration of the cavity 22. Hence, although the cavity 22 is depicted with a concave shape, the cavity 22 may comprise different configurations depending on the specific application of the heat exchanger.

For example, the cavity 22 may comprise a triangular cross section where the cavity 22 extends to a point in the direction of the air flow through the heat exchanger layer 10. Alternatively, the cavity 22 may comprise a rectangular cross section with a straight back surface. In this instance, the cavity 22 may comprise straight sides only.

As depicted in Figures 3a and 3b, each cavity 22 extends in a direction parallel to the fins 12, 14 and towards the central section of the heat exchanger layer 10. In the present example, the cavity 22 extends in a direction parallel to the direction in which the herringbone-shaped fins are arranged. In other words, the cavity 22 extends in a direction which is parallel to the direction of the airflow in use.

Figures 3a and 3b relate to a heat exchanger layer 10 comprising a cavity 22 at the join between the guard fins 16 and the herringbone-shaped fins 14 at the inlet side 18 of the layer 10. However, in Figures 4a and 4b, the heat exchanger layer 10 is depicted as comprising a plurality of guard fins 16 at both the inlet side 18 and the outlet side 20 of the heat exchanger layer 10.

Accordingly, a cavity 20 is provided at the join or boundary between each of the guard fins 16 and herringbone-shaped fins 14 on both the inlet side 18 and the outlet side 20 of the layer 10. The cavity 22 present at the join or boundary between each guard fin 16 and herringbone-shaped find 14 at the outlet side may comprise any of the features described in relation to the cavities 22 located at the inlet side 18.

The cavity 22 present at the outlet side 20 may be arranged such that air flowing through the flow channels 14a defined by the herringbone-shaped fins 14 enters the cavity before being transferred to the flow channels 16b between each guard fin 16 at the outlet side 20 of the heat exchanger layer 10. This has the benefit of further reducing the pressure drop in the airflow along its path between the inlet side and outlet side to further increase the heat transfer efficiency of the heat exchanger as a whole.

Additionally, the presence of a cavity 22 at the outlet side provides a further area to act as a "crumple zone" to protect the herringbone-shaped fins 14 from impact or handling damage, as well as allowing for thermal expansion to take place as discussed above.

In Figures 4a and 4b, the cavities 22 at the inlet side and outlet side may all be located in the herringbone-shaped fins 14 at the respective boundaries between the two fin types 14, 16.

The presence of the cavity 22 at the inlet side of the heat exchanger layer may result in up to a 25% reduction of the pressure drop in the airflow as it moves from the flow channels defined the guard fins 16 and the channels defined by the herringbone-shaped fins 14 compared to a heat exchanger layer without said cavity 22. Meanwhile, at the outlet end, the presence of a cavity 22 at each boundary between the fins 14, 16 can result up to an 9% reduction of the pressure drop in the airflow as it moves from the flow channels defined the herringbone-shaped fins 14 and the channels defined by the guard fins 16 compared to a heat exchanger layer without said cavity 22.

Figures 3 and 4 primarily depict the fin arrangements 14, 16 for each layer. For completeness, Figures 5a and 5b show the complete layer 10 of the plate-fin heat exchanger including the fins 14, 16 with the cavities 22 at both the inlet end 18 and outlet end 20, and the top plate 12a and the base plate 12b. In addition, the exploded view of the layer 10 depicted in Figure 5b clearly shows the cavities 22a, 22b formed in the herringbone-shaped fins 14.

Any of the features discussed in connection with the plate 12a, 12b provided in relation to Figures 1a and 1b apply for the layer 10 depicted in Figures 5a and 5b. In particular, the fins 14, 16 may be connected to each of the plates 12a, 12b by any means, for example brazing or welding. Moreover, a further set of fins, having the same arrangement and design as the plurality of fins 14, 16 may be present extending from the top plate 12a to form a second layer of the plate-fin heat exchanger adjacent to the layer 10 depicted in Figures 5a and 5b.

As discussed above, the layer 10 of the heat exchange may form part of a plate-fin heat exchanger 30 depicted in Figures 6a and 6b. The plate-fin heat exchanger 30 comprises a first layer 10 which corresponds to the layer 10 depicted in Figures 5a and 5b, and a first adjacent layer 11a and a second adjacent layer 11b. Each of the first and second adjacent layers 11a and 11b comprise fins 15 having a corrugated geometry, more specifically a serrated corrugation or offset-strip corrugation.

The plate-fin heat exchanger 30 may comprise up to 50-250 layers, and as will be appreciated, the geometry of the fins may alternate between the herringbone-shaped fins 14 and the corrugated fins of layers 11a and 11b accordingly. This alternation of layers ensures maximum heat transfer can take place between the fluid types.

In addition, the orientation of the inlets and outlets in each alternating layer of the plate-fin heat exchanger 30 are offset by 90 degrees. This means that the flow direction in each layer 10, 11a, 11b is perpendicular with respect to the adjacent layers. In other words, the heat exchanger 30 allows for a cross-flow arrangement.

Although the geometry of the plate-fin heat exchanger 30 in Figures 6a and 6b alternates between the two fin types, an alternative plate-fin heat exchanger 30 is depicted in Figures 7a and 7b which comprises the same fin arrangement in each layer. In particular, each layer 10a-c comprises the same fin arrangement as shown in Figures 5a and 5b, namely a set of herringbone-shaped fins 14 in the central section of each layer, and guard fins 16 at the inlet end 18 and outlet end 20 to provide protection to the herringbone-shaped fins 14.

The orientation of the inlets and outlets in each alternating layer of the plate-fin heat exchanger 30 in Figures 7a and 7b is offset by 90 degrees in the same manner as the heat exchanger depicted in Figures 6a and 6b. Accordingly, the plate-fin heat exchanger 30 allows for a cross-flow arrangement.

The present invention also extends to a method for forming the heat exchanger layer 10, and the subsequent heat exchanger comprising a plurality of said layers 10.

The heat exchanger layer 10 may be formed of any available manufacturing technique, and the cavity 22 may be formed by removing a portion of the material of the herringbone-shaped fins 14 using machining techniques. For example, the cavity 22 may be formed by cutting away a portion of the fins 14, or alternatively by milling a portion of the fins 14. As a further alternative the cavity 22 may be formed using abrasive techniques such as grinding.

It is also possible for the heat exchanger layer 10 to be formed using additive manufacturing techniques. In this scenario, the guard fins 16 and the herringbone-shaped fins 14 may be formed separately and then joined together via any joining technique, such as welding or brazing. Alternatively, the guard fins 16 and herringbone-shaped fins 14 may be formed as a single unit, albeit where the guard fins 16 are formed within a thicker profile to provide a stiffer material when compared to the herringbone-shaped fins 14.

In either scenario of additive manufacturing, the fins 14, 16 can be formed with the cavity 22 already present within the surface of the relevant fins 14, 16, without requiring a portion of the material to be removed to form the cavity 22.

## Claims

1. A layer (10) of a plate-fin heat exchanger comprising:
an inlet side (18) for receiving a fluid;
an outlet side (20);
a plurality of first fins (16) each having a first end located at the inlet side and extending in direction towards the outlet side to a second end to provide a plurality of first flow channels (16a) for the fluid;
a central section comprising a plurality of second fins (14) each having a first end adjacent to the second end of each of the plurality of first fins and extending towards the outlet side to a second end to provide a plurality of second flow channels (14a) for the fluid;
a plurality of third fins (16) each having a first end adjacent to the second end of each of the plurality of second fins of the central section and extending to a second end at the outlet side to provide a plurality of third flow channels (16a) for the fluid;
a first cavity (22a) provided in each of the plurality of second fins at the boundary between the plurality of first fins and the plurality of second fins;
**characterized in that** it further comprises
a second cavity (22b) in each of the plurality of second fins at the boundary between the plurality of second fins and the plurality of third fins.

2. The layer (10) according to claim 1, wherein the plurality of first fins (16) comprise guard fins arranged to protect the plurality of second fins (14) from impact.

3. The layer (10) according to claim 2, wherein the plurality of first fins (16) are formed of a stronger material than the plurality of second fins (14).

4. The layer (10) according to claim 1, 2 or 3, wherein the first cavity (22a) is formed in an end surface of each of the second plurality of fins (14), wherein the end surface is substantially perpendicular the direction of the fluid in use.

5. The layer (10) according to any preceding claim, wherein the plurality of first flow channels (16a) comprise a first geometry and the plurality of second flow channels (14a) comprise a second geometry different from the first geometry.

6. The layer (10) according to claim 5, wherein the first cavity (22a) is arranged to provide a transition region for the air flow in use as it travels from the first geometry defined by the plurality of first fins (16) and the second geometry of the plurality of second fins (14).

7. The layer (10) according to any of claims 5 or 6, wherein the plurality of third flow channels (16a) comprise a third geometry which is the same as the first geometry (16a).

8. The layer (10) according to any preceding claim, wherein the first cavity (22a) comprises a concave depression.

9. The layer (10) according to any preceding claim, wherein the plurality of second fins (14) comprise herringbone-shape fins.

10. The layer (10) according to any preceding claim, wherein the plurality of third fins (16) are formed of the same material as the plurality of first fins (16).

11. The layer (10) according to claim 10, wherein the plurality of third fins (16) arranged to protect the plurality of second fins (14) from impact on the outlet side (20).

12. A plate-fin heat exchanger comprising: a plurality of layers as claimed in any preceding claim.

13. A method of manufacturing a layer of a heat exchanger as claimed in any of claims 1 to 11 comprising:
providing a base plate;
connecting the plurality of first fins (16) to the base plate;
connecting the plurality of second fins (14) to the base plate;
joining the second end of each of the plurality of first fins to the first end of each of the plurality of second fins;
forming a cavity (22a) in each of the plurality of second fins at the boundary between the plurality of first fins and the plurality of second fins.

14. The method as claimed in claim 13, wherein the step of forming the cavity comprises using machining techniques including one of cutting, milling or abrasion.

## Patentansprüche

1. Schicht (10) eines Rippen-Plattenwärmetauschers, umfassend:
eine Einlassseite (18) zum Empfangen eines Fluids;
eine Auslassseite (20);
eine Vielzahl von ersten Rippen (16), die jeweils ein sich auf der Einlassseite befindendes erstes Ende aufweisen und sich unter Bereitstellen einer Vielzahl von ersten Strömungskanälen (16a) für das Fluid in einer Richtung zu der Auslassseite gerichtet zu einem zweiten Ende erstrecken;
einen mittleren Abschnitt, umfassend eine Vielzahl von zweiten Rippen (14), die jeweils ein zu dem zweiten Ende jeder der Vielzahl von ersten Rippen benachbartes erstes Ende aufweisen und sich unter Bereitstellen einer Vielzahl von zweiten Strömungskanälen (14a) für das Fluid zu der Auslassseite gerichtet zu einem zweiten Ende erstrecken;
eine Vielzahl von dritten Rippen (16), die jeweils ein zu dem zweiten Ende jeder der Vielzahl von zweiten Rippen des mittleren Abschnitts benachbartes erstes Ende aufweisen und sich unter Bereitstellen einer Vielzahl von dritten Strömungskanälen (16a) für das Fluid zu einem zweiten Ende an der Auslassseite erstrecken;
eine erste Aussparung (22a), die in jeder der Vielzahl von zweiten Rippen an der Grenze zwischen der Vielzahl von ersten Rippen und der Vielzahl von zweiten Rippen bereitgestellt ist;
**dadurch gekennzeichnet, dass** sie ferner
eine zweite Aussparung (22b) in jeder der Vielzahl von zweiten Rippen an der Grenze zwischen der Vielzahl von zweiten Rippen und der Vielzahl von dritten Rippen umfasst.

2. Schicht (10) nach Anspruch 1, wobei die Vielzahl von ersten Rippeln (16) Schutzrippen umfasst, die zum Schützen der Vielzahl von zweiten Rippen (14) vor Stoß angeordnet sind.

3. Schicht (10) nach Anspruch 2, wobei die Vielzahl von ersten Rippen (16) aus einem stärkeren Material als die Vielzahl von zweiten Rippen (14) ausgebildet ist.

4. Schicht (10) nach Anspruch 1, 2 oder 3, wobei die erste Aussparung (22a) in einer Endfläche jeder der zweiten Vielzahl von Rippen (14) ausgebildet ist, wobei die Endfläche im Wesentlichen senkrecht der Richtung des verwendeten Fluids ist.

5. Schicht (10) nach einem der vorhergehenden Ansprüche, wobei die Vielzahl von ersten Strömungskanälen (16a) eine erste Geometrie umfasst und die Vielzahl von zweiten Strömungskanälen (14a) eine von der ersten Geometrie verschiedene zweite Geometrie umfasst.

6. Schicht (10) nach Anspruch 5, wobei die erste Aussparung (22a) zum Bereitstellen eines Übergangsbereichs für den verwendeten Luftstrom angeordnet ist, während sich dieser von der durch die Vielzahl von ersten Rippen (16) definierten ersten Geometrie und der zweiten Geometrie der Vielzahl von zweiten Rippen (14) bewegt.

7. Schicht (10) nach einem der Ansprüche 5 oder 6, wobei die Vielzahl von dritten Strömungskanälen (16a) eine dritte Geometrie gleich der ersten Geometrie (16a) umfasst.

8. Schicht (10) nach einem der vorhergehenden Ansprüche, wobei die erste Aussparung (22a) eine konkave Vertiefung umfasst.

9. Schicht (10) nach einem der vorhergehenden Ansprüche, wobei die Vielzahl von zweiten Rippen (14) Rippen in Fischgrätenform umfasst.

10. Schicht (10) nach einem der vorhergehenden Ansprüche, wobei die Vielzahl von dritten Rippen (16) aus dem gleichen Material ausgebildet ist wie die Vielzahl von ersten Rippen (16).

11. Schicht (10) nach Anspruch 10, wobei die Vielzahl von dritten Rippen (16) angeordnet zum Schützen der Vielzahl von zweiten Rippen (14) vor Stoß auf der Auslassseite (20).

12. Rippen-Plattenwärmetauscher, umfassend: eine Vielzahl von Schichten nach einem der vorhergehenden Ansprüche.

13. Verfahren zum Herstellen einer Schicht eines Wärmetauschers nach einem der Ansprüche 1 bis 11, umfassend:
Bereitstellen einer Grundplatte;
Verbinden der Vielzahl von ersten Rippen (16) mit der Grundplatte;
Verbinden der Vielzahl von zweiten Rippen (14) mit der Grundplatte;
Zusammenfügen des zweiten Endes jeder der Vielzahl von ersten Rippen mit dem ersten Ende jeder der Vielzahl von zweiten Rippen;
Ausbilden einer Aussparung (22a) in jeder der Vielzahl von zweiten Rippen an der Grenze zwischen der Vielzahl von ersten Rippen und der Vielzahl von zweiten Rippen.

14. Verfahren nach Anspruch 13, wobei der Schritt des Ausbildens der Aussparung Verwenden von spanenden Bearbeitungstechniken, einschließlich Schneiden, Fräsen oder Abtragung, umfasst.

## Revendications

1. Couche (10) d'un échangeur de chaleur à plaques et ailettes comprenant :
un côté d'entrée (18) pour recevoir un fluide ;
un côté de sortie (20) ;
une pluralité de premières ailettes (16) ayant chacune une première extrémité située au niveau du côté d'entrée et
s'étendant en direction du côté de sortie jusqu'à une deuxième extrémité pour fournir une pluralité de premiers canaux d'écoulement (16a) pour le fluide ;
une section centrale comprenant une pluralité de deuxièmes ailettes (14) ayant chacune une première extrémité adjacente à la deuxième extrémité de chacune de la pluralité de premières ailettes et s'étendant vers le côté de sortie jusqu'à une deuxième extrémité pour fournir une pluralité de deuxièmes canaux d'écoulement (14a) pour le fluide ;
une pluralité de troisièmes ailettes (16) ayant chacune une première extrémité adjacente à la deuxième extrémité de chacune de la pluralité de deuxièmes ailettes de la section centrale et s'étendant jusqu'à une deuxième extrémité au niveau du côté de sortie pour fournir une pluralité de troisièmes canaux d'écoulement (16a) pour le fluide ;
une première cavité (22a) prévue dans chacune de la pluralité de deuxièmes ailettes à la limite entre la pluralité de premières ailettes et la pluralité de deuxièmes ailettes ; **caractérisée en ce qu'**elle comprend en outre
une deuxième cavité (22b) dans chacune de la pluralité de deuxièmes ailettes à la limite entre la pluralité de deuxièmes ailettes et la pluralité de troisièmes ailettes.

2. Couche (10) selon la revendication 1, dans laquelle la pluralité de premières ailettes (16) comprend des ailettes de protection agencées pour protéger la pluralité de deuxièmes ailettes (14) contre un impact.

3. Couche (10) selon la revendication 2, dans laquelle la pluralité de premières ailettes (16) est formée d'un matériau plus résistant que la pluralité de deuxièmes ailettes (14).

4. Couche (10) selon la revendication 1, 2 ou 3, dans laquelle la première cavité (22a) est formée dans une surface d'extrémité de chacune de la deuxième pluralité d'ailettes (14), dans laquelle la surface d'extrémité est sensiblement perpendiculaire la direction du fluide en utilisation.

5. Couche (10) selon l'une quelconque des revendications précédentes, dans laquelle la pluralité de premiers canaux d'écoulement (16a) comprend une première géométrie et la pluralité de deuxièmes canaux d'écoulement (14a) comprend une deuxième géométrie différente de la première géométrie.

6. Couche (10) selon la revendication 5, dans laquelle la première cavité (22a) est agencée pour fournir une région de transition pour l'écoulement d'air en utilisation lorsqu'il se déplace depuis la première géométrie définie par la pluralité de premières ailettes (16) et la deuxième géométrie de la pluralité de deuxièmes ailettes (14).

7. Couche (10) selon l'une quelconque des revendications 5 ou 6, dans laquelle la pluralité de troisièmes canaux d'écoulement (16a) comprend une troisième géométrie qui est la même que la première géométrie (16a).

8. Couche (10) selon l'une quelconque des revendications précédentes, dans laquelle la première cavité (22a) comprend une dépression concave.

9. Couche (10) selon l'une quelconque des revendications précédentes, dans laquelle la pluralité de deuxièmes ailettes (14) comprend des ailettes en forme de chevrons.

10. Couche (10) selon l'une quelconque des revendications précédentes, dans laquelle la pluralité de troisièmes ailettes (16) est formée du même matériau que la pluralité de premières ailettes (16).

11. Couche (10) selon la revendication 10, dans laquelle la pluralité de troisièmes ailettes (16) agencée pour protéger la pluralité de deuxièmes ailettes (14) contre un impact sur le côté de sortie (20).

12. Échangeur de chaleur à plaques et ailettes comprenant : une pluralité de couches selon l'une quelconque des revendications précédentes.

13. Procédé de fabrication d'une couche d'un échangeur de chaleur selon l'une quelconque des revendications 1 à 11 comprenant :
la fourniture d'une plaque de base ;
le raccordement de la pluralité de premières ailettes (16) à la plaque de base ;
le raccordement de la pluralité de deuxièmes ailettes (14) à la plaque de base ;
la jonction de la deuxième extrémité de chacune de la pluralité de premières ailettes à la première extrémité de chacune de la pluralité de deuxièmes ailettes ;
la formation d'une cavité (22a) dans chacune de la pluralité de deuxièmes ailettes à la limite entre la pluralité de premières ailettes et la pluralité de deuxièmes ailettes.

14. Procédé selon la revendication 13, dans lequel l'étape de formation de la cavité comporte l'utilisation de techniques d'usinage comprenant l'une parmi la découpe, le fraisage ou l'abrasion.
